(19) Europäisches Patentamt
European Patent Office
Office européen des brevets

(11) **EP 2 893 360 B1**

(12) **EUROPEAN PATENT SPECIFICATION**

(45) Date of publication and mention
of the grant of the patent:
**11.07.2018 Bulletin 2018/28**

(21) Application number: **13792453.6**

(22) Date of filing: **05.09.2013**

(51) Int Cl.:
**G01P 13/02** *(2006.01)*    **G01P 21/00** *(2006.01)*
**B64D 43/02** *(2006.01)*

(86) International application number:
**PCT/IB2013/058320**

(87) International publication number:
**WO 2014/037902 (13.03.2014 Gazette 2014/11)**

(54) **METHOD OF AND SYSTEM FOR CALCULATION AND CONSOLIDATION OF FLIGHT PARAMETERS OF AN AIRCRAFT**

VERFAHREN UND SYSTEM ZUR BERECHNUNG UND KONSOLIDIERUNG VON FLUGPARAMETERN EINES FLUGZEUGS

PROCÉDÉ ET SYSTÈME POUR CALCUL ET CONSOLIDATION DE PARAMÈTRES DE VOL D'UN AÉRONEF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.09.2012 IT TO20120770**

(43) Date of publication of application:
**15.07.2015 Bulletin 2015/29**

(73) Proprietor: **Leonardo S.p.A.**
**00195 Roma (IT)**

(72) Inventor: **BRUTI, Danilo**
**I-10055 Condove (IT)**

(74) Representative: **Bertolotto, Simone et al**
**Studio Torta S.p.A.**
**Via Viotti, 9**
**10121 Torino (IT)**

(56) References cited:
**EP-A2- 2 434 296**    **GB-A- 2 432 914**
**US-A- 5 423 209**    **US-A1- 2004 011 124**
**US-A1- 2011 238 373**

**Description**

TECHNICAL FIELD

The present invention relates to a method and system of calculation and consolidation of flight parameters of an aircraft.

BACKGROUND ART

Almost all operating aircraft, both civil and military, use sensors that protrude from the surfaces of the aircraft, in particular floating fins for measuring incidence and sideslip angles. The sensors are able to directly measure quantities such as flow angles and local velocities and, in general, flight parameters useful for determining the aircraft's attitude, altitude and flight speed. The algorithms used for processing the data measured by these sensors, as well as their peculiarities tied to the location of the sensors on the aircraft, their characteristics and the system reliability/redundancy requirements, are developed for virtually the sole purpose of measurement calibration.

Static pressure sensors of the type available on the market, for example pressure sensors made using MEMS technology, have the advantage of small size and weight and do not protrude from the surface on which they are mounted. The use of such pressure sensors is therefore desirable. However, to obtain one or more of the above-mentioned flight parameters starting from static pressure measurements, complex algorithms are needed, which require considerable calculating capacity. Known algorithms for the calculation of flight parameters starting from static pressure measurements are typically based on using artificial intelligence and neural networks and guarantee functionality for calculation of the flight parameters and detection of any failures in the pressure sensors.

Document GB2432914 relates generally to air data sensing systems, such as flush air data systems (FADS), for use on an air vehicle for providing fault isolation in artificial intelligence based air data sensing systems, such as neural network based FADS.

Document US 2011/238373 relates to in-flight calibration of aircraft pitot-static systems by modeling pressure error as a continuous function of airspeed. Measurements of static and differential pressure and Global Positioning System (GPS)-based ground speed measurements are utilized for computing pressure errors over a range of airspeed.

Document US 5,423,209 relates to a truncated pyramid-shape multi-hole Pitot probe and a flight velocity detection system using the truncated pyramid-shape multi-hole Pitot probe.

Document EP2434296 relates generally to sensor systems and more specifically to airspeed sensor systems.

Document US 2004/011124 pertains to a process for determining aerodynamic parameters and to a process for detecting a fault with a probe used to determine the aerodynamic parameters of the airflow surrounding an aircraft.

However, solutions of known type have the drawback of requiring a high calculating capacity (with consequent energy consumption) and, if a failure of one or more pressure sensors is detected, do not allow the exclusion of this/these sensor(s). In practice, these solutions of known type "live" with the failure. The information coming from faulty sensors is still used in the calculation of the flight parameters.

DISCLOSURE OF INVENTION

The object of the present invention is to provide a method and system of calculation and consolidation of flight parameters of an aircraft that overcome the drawbacks of the known art.

According to the present invention, a method and system of calculation and consolidation of flight parameters of an aircraft are provided as defined in the appended claims.

BRIEF DESCRIPTION OF THE DRAWINGS

For a better understanding of the present invention, some preferred embodiments will now be described, purely by way of a non-limitative example, with reference to the attached drawings, where:

- Figures 1a and 1b show views from above and below of an aircraft equipped with static pressure sensors at a plurality of locations; and
- Figure 2 shows, by means of a flowchart, a method of calculation and validation of flight parameters according to one embodiment of the present invention.

BEST MODE FOR CARRYING OUT THE INVENTION

The method according to the present invention combines improved flight parameter calculation functionality with functionality for identifying and isolating malfunctioning sensors.

In particular, the method according to the present invention is based on the use of mathematical and physical models that bind the flight parameters to be calculated (or, more in general, state variables) to parameters measured in flight (local static pressures). The use of these models enables easier validation of the entire process with respect to the known art, with positive repercussions in terms of traceability and verification in a certification procedure.

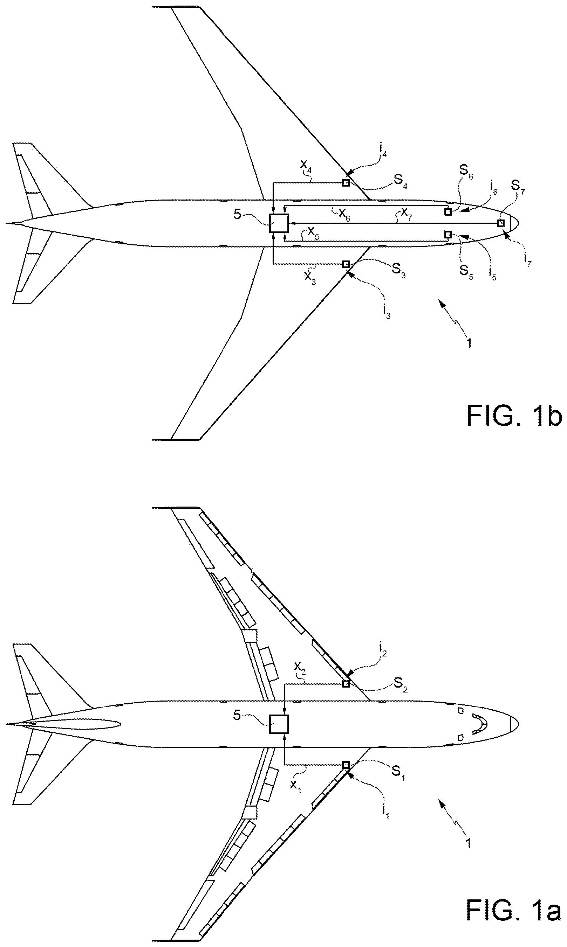

The local static pressure measurements are obtained by using a plurality N of pressure sensors $S_1$-$S_N$, of known type and available on the market, positioned in a plurality of respective locations on an aircraft. The pressure sensors can be of any type and made using any manufacturing technology (for example, MEMS technology), provided that they can be "buried" in the body of the aircraft in Figures 1a and 1b, in the sense that they do not significantly protrude from the surface of the aircraft's body. For example, such sensors do not significantly protrude when they do not constitute a radar signature element.

Figures 1a and 1b show an aircraft 1 by way of example, seen respectively from above and below, and comprising a plurality N of pressure sensors $S_1$-$S_N$ with each one arranged at a respective location $i_1$-$i_N$ on the aircraft 1 and possible housed in a respective casing able to protect each respective sensor from the external environment. In particular, each sensor $S_1$-$S_N$ is integrated into the body of the aircraft 1 such that it is substantially coplanar with the body of the aircraft 1 at the location $i_1$-$i_N$ in which it is positioned, or arranged within the body of the aircraft 1. In general, the sensors $S_1$-$S_N$, or in any case the casings that house a respective sensor $S_1$-$S_N$, do not protrude from the surface of the body of the aircraft 1 at the locations $i_1$-$i_N$ where they are positioned. In order to allow the sensors $S_1$-$S_N$ to correctly acquire static pressure information, the body of the aircraft 1 has one or more holes (not shown) at each location $i_1$-$i_N$ that form the only interface of the pressure sensors $S_1$-$S_N$ with the outside of the aircraft 1. The use of sensors integrated in the body of the aircraft 1 ensures a low contribution of the sensors $S_1$-$S_N$ to the radar signature of the aircraft 1.

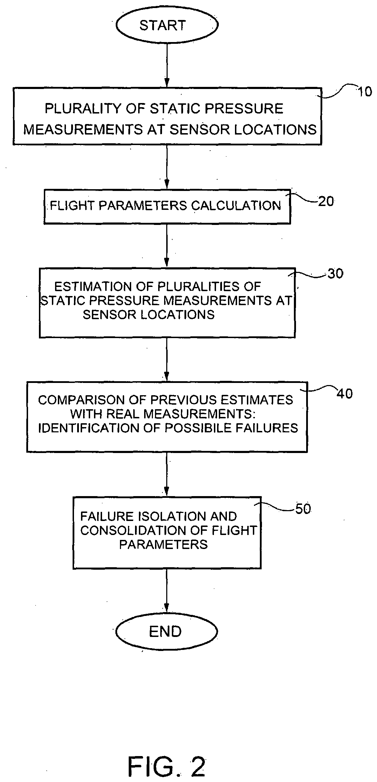

As mentioned, in use, each sensor $S_1$-$S_N$ detects a static pressure value at location $i_1$-$i_N$, and generates a transduced signal $X_1$-$X_N$ indicative of the static pressure value measured at a given moment in time (or, alternatively, an average value over a predetermined period of time). The transduced signal $X_1$-$X_N$ is, in particular, an electrical signal, suitable for being received and processed by a computer 5, placed on board the aircraft 1. The computer 5 is further configured to implement a calculation algorithm of the type shown in the flowchart in Figure 2.

The number of sensors $S_1$-$S_N$ is chosen so as to comply with the system's redundancy and reliability requirements and therefore so as to support a number of failures of single sensors $S_1$-$S_N$ without compromising the calculating capacity of the flight parameters, keeping their accuracy within a required limit (depending, for example, on the required aircraft-level specifications, as provided by the aircraft's designer to ensure controllability of the aircraft, and/or on the basis of any national legislations. The static pressure information of a single sensor $S_1$-$S_N$ actually weighs on the calculated value of the flight parameters differently according to the total number N of sensors $S_1$-$S_N$: the larger the total number N of sensors $S_1$-$S_N$, the smaller this weight. The applicant has established that an ideal number N of sensors $S_1$-$S_N$ (in terms of accuracy of calculated flight parameter values and resilience to possible failures) is 9. In general, it is preferable to have $N \geq 7$. Nevertheless, it is clear that it is possible to calculate flight parameters according to the present invention also using a number N of sensors $S_1$-$S_N$ less than 7, accepting a drop in the accuracy of the calculated flight parameters values and a reduced ability to compensate for the possible failure of one or more sensors $S_1$-$S_N$.

The choice of the locations $i_1$-$i_N$ for the sensors $S_1$-$S_N$ on aircraft 1 is guided by the need to maximize the sensitivity of the acquired pressure values to variations in the flight parameters during the flight of the aircraft 1. Assessments for defining the "best" locations can be carried out, for example, by using computer simulators.

The applicant has established that the areas where changes in pressure corresponding to variations in the flight parameters (i.e. the gradients) are greatest (absolute values intended) are locations $i_1$-$i_N$ shown in Figures 1a and 1b.

Figure 2 shows, by means of a flowchart, the steps a method of calculation of flight parameters starting from the pressure measurements taken by the sensors $S_1$-$S_N$. The mathematical model for calculation of the flight parameters is developed from the aerodynamic mathematical model, in particular the aerodynamic model in the following equation (1):

$$P_{loci}(AOA, AOS, Mach) = Ps_\infty + Cp_i(AOA, AOS, Mach) * \frac{1}{2}\gamma Ps_\infty Mach^2 \quad (1)$$

where $P_{loci}$ is the local static pressure measured by a sensor $S_1$-$S_N$ at the respective location $i_1$-$i_N$, AOA is the angle of attack (sometimes called the angle of incidence) and indicated by letter $\alpha$, AOS is the angle of sideslip and indicated by letter $\beta$, Mach represents the flight Mach number, $Ps_\infty$ is the flight static pressure, $Cp_i$ is the pressure coefficient related to the location $i_1$-$i_N$ considered, and $\gamma$ is the ratio between specific heat at constant pressure and the specific heat at constant volume and is a constant having a value, for air, of between 1.3 and 1.5, in particular approximately 1.4 in the operating temperature range (between -40 and +40 °C).

The pressure coefficient $Cp_i$ represents the link between the flight parameters to be calculated (state variables,

$Ps_\infty$, AOA, AOS and Mach) and the local static pressures $P_{loci}$ measured in flight (dependent on the flight parameters AOA, AOS and Mach). The values of the pressure coefficient $Cp_i$ at the various locations $i_1-i_N$ is obtained by using computer simulatorsand/or experimental testing in wind tunnels. The thus-obtained values for the pressure coefficient $Cp_i$ are then tabulated in matrix form.

In greater detail, with regards to an experimental approach, construction of the arrays of $Cp_i$ values is achieved as specified in steps a - f below:

a. A Mach value is set;
b. An angle of sideslip AOS value of zero is set;
c. The value of the angle of attack AOA is varied in predetermined steps, generally between 0.5 degrees and 1.0 degree; a $Cp_i$ value is obtained for each pair of values (AOS; AOA) ;
d. Step c is repeated, setting a non-zero value for the angle of sideslip AOS; in particular, the repetition of step c must be carried out the same number of times as the values of angle of sideslip AOS for which it is intended to collect $Cp_i$ values. In general, for AOS, values between 0 degrees and 10 degrees with a 2-degree step, both positive and negative, are selected;
e. For each pair of values (AOS; AOA), a $Cp_i$ value is acquired on the basis of the previous step;
f. Steps b-e are repeated, setting a Mach value different from the value set in step a; in particular the repetition of steps b-f must be carried out the same number of times as the values of Mach for which it is intended to collect $Cp_i$ values. In general, Mach values between 0.2 and the maximum envisaged by requirements are selected, with a variable step and preferably closer together near to the maximum (for example, a step of 0.1). At low Mach speeds, a step of 0.2 is adequate.

In this way, for each Mach value considered, it is possible to build a table (or array) M containing a plurality of pressure coefficient $Cp_i$ values for each pair of values (AOS; AOA) considered. Considering P flight Mach values, P arrays $M_1-M_P$ are thus created.

Characterizing equation (1) for each pressure sensor $S_1-S_N$ present on the aircraft 1, gives a system of non-linear equations, in which the subscript "i" takes i values from 1 to N:

$$P_{loci} = F_i\left(Ps_\infty, Mach, AOA, AOS\right) \qquad\qquad (2)$$

where the $P_{loci}$ variables constitute the known terms (measured by the sensors $S_1-S_N$) and $Ps_\infty$, AOA, AOS and Mach are the flight parameters to be calculated, which constitute the unknown terms of a system of equations as better expressed hereinafter. The function $F_i$ in equation (2) is the aerodynamic model as per equation (1).

The main characteristic of this system of equations is nonlinearity, already present in the aerodynamic model, made explicit by the square of the Mach number ($Mach^2$) and contained in the relation, defined in points and described by the arrays $M_1-M_P$, which bind the pressure coefficients $Cp_i$ and the flight parameters ($Ps_\infty$, AOA, AOS and Mach).

Therefore, the resolution of the system of equations according to step 20 in Figure 2 is interactively driven, starting from the consolidated solution at the previous time of calculation (initial condition) and performing linearization of the system. The iteration is implemented by making the system linear around the solution of the previous iteration and then calculating the variation of the state variables (in this case, the flight parameters $Ps_\infty$, AOA, AOS and Mach). The Newton-Raphson method, known in the literature, is used for this purpose.

For a single sensor $S_1-S_N$, placed at the respective location $i_1-i_N$, the pressure variation with respect to the previous time can be written in the manner defined by the following equation (3) :

$$\delta P_{loci} = \frac{\partial F_i}{\partial P_\infty}\,\delta Ps_\infty \;+\; \frac{\partial F_i}{\partial AOA}\,\delta AOA \;+\; \frac{\partial F_i}{\partial AOS}\,\delta AOS \;+\; \frac{\partial F_i}{\partial Mach}\,\delta Mach \;+\; o\!\left(\delta VAR_j^2\right) (3)$$

where subscript "i" identifies each location $i_1-i_N$, and where VAR is the following vector:

$$VAR = \left[Ps_\infty, Mach, AOA, AOS\right] \qquad\qquad (4)$$

where j is the index of the locations of vector VAR (i.e., for j=1, one has $VAR_1=Ps_\infty$; for j=2, one has $VAR_2=Mach$; for j=3, one has $VAR_3=AOA$; for j=4, one has $VAR_4=AOS$).

By defining array J as the gradient of array F ([J] = [∇F]), the notation of equation (3) can be simplified as follows:

$$\delta P_{loci} = \sum_{j} J_{ij} \delta VAR_{j} + o\left(\delta VAR_{j}^{2}\right) \qquad (5)$$

It should be noted that quantities preceded by the symbol "δ" represent the perturbations with respect to values/quantities defined at the previous time of calculation. As already mentioned, the initial condition of each calculation cycle is set equal to the solution calculated at the time of the previous calculation. Backtracking, it is necessary to initialize the calculation the very first time, as there is obviously no previously calculated solution. The initialization is carried out using predetermined values, for example the values regarding the aircraft 1 when stationary (on the ground).

Ignoring terms above the first order (i.e. performing a linearization operation) and considering equation (3) or, equivalently, equation (4), written for all the sensors and in matrix notation, it is possible to represent the system of equations (4) in the following manner:

$$\begin{bmatrix} \delta P_{loc1} \\ ... \\ \delta P_{locN} \end{bmatrix} = [J] \cdot \begin{bmatrix} \delta Ps_{\infty} \\ \delta AOS \\ \delta AOA \\ \delta Mach \end{bmatrix} \qquad (6)$$

where the number of rows represents the number of information items (signals $X_1$-$X_N$) or, equivalently, the sensors $S_1$-$S_N$ (used for calculation of the flight parameters) and the number of columns represents the number of unknown parameters (the actual flight parameters).

Therefore, defining the flight parameters that must be calculated in the current iteration as $PS_{\infty NEW}$, $AOA_{NEW}$, $AOS_{NEW}$ and $Mach_{NEW}$, and those regarding the previous iteration (or the initialization parameters at the first iteration) as $PS_{\infty OLD}$, $AOA_{OLD}$, $AOS_{OLD}$ and $Mach_{OLD}$, gives:

$$\begin{bmatrix} Ps_{\infty NEW} \\ Mach_{NEW} \\ AOA_{NEW} \\ AOS_{NEW} \end{bmatrix} = \begin{bmatrix} Ps_{\infty OLD} \\ Mach_{OLD} \\ AOA_{OLD} \\ AOS_{OLD} \end{bmatrix} + \begin{bmatrix} \delta Ps_{\infty} \\ \delta Mach \\ \delta AOA \\ \delta AOS \end{bmatrix} \qquad (7)$$

Formula (7) is solved iteratively until a consolidated solution is reached, as described hereinafter.

Starting from formula (7), the state variables vector updated during the iterations (the one with the "NEW" suffix) is obtained by inverting array J as shown in the following formula (8):

$$\begin{bmatrix} Ps_{\infty NEW} \\ Mach_{NEW} \\ AOA_{NEW} \\ AOS_{NEW} \end{bmatrix} = \begin{bmatrix} Ps_{\infty OLD} \\ Mach_{OLD} \\ AOA_{OLD} \\ AOS_{OLD} \end{bmatrix} + [J]^{-1} \begin{bmatrix} \delta P_{loc1} \\ ... \\ \delta P_{locN} \end{bmatrix} \qquad (8)$$

For an overdetermined system (number of known parameters greater than those unknown), the inversion of array J is carried out by applying the linear or ordinary least squares method:

$$\begin{bmatrix} Ps_{\infty NEW} \\ Mach_{NEW} \\ AOA_{NEW} \\ AOS_{NEW} \end{bmatrix} = \begin{bmatrix} Ps_{\infty OLD} \\ Mach_{OLD} \\ AOA_{OLD} \\ AOS_{OLD} \end{bmatrix} + \left[ (\nabla^T F)(\nabla F) \right]^{-1} \nabla^T F \begin{bmatrix} \delta P_{loc1} \\ ... \\ \delta P_{locN} \end{bmatrix} \qquad (9)$$

where $\left[ (\nabla^T F)(\nabla F) \right]^{-1} \nabla^T F$ analytically represents the operation of inverting array J. This gives:

$$[J]^{-1} = \left[ [J]^T [J] \right]^{-1} [J]^T = \left[ (\nabla^T F)(\nabla F) \right]^{-1} \nabla^T F \ .$$

For each iteration, array J is calculated again using the $CP_i$ values stored in the P arrays $M_1$-$M_P$, starting from the values of the flight parameters calculated in the previous iteration (those with the "OLD" suffix). In other words, on the basis of the Mach, AOS and AOA values calculated in the previous iteration, for each location $i_1$-$i_N$, a corresponding value of $Cp_i$ is obtained from arrays $M_1$-$M_P$; then, using the thus-obtained value of $Cp_i$ together with the pressure value $PS_{\infty OLD}$ in the "F" formula (equation (1)), it is possible to perform the operation described by formula (9). As already mentioned, these step are performed for each location $i_1$-$i_N$, or, in other words, for each sensor $S_1$-$S_N$.

As mentioned above, on the first iteration, when current values of the flight parameters $Ps_{\infty OLD}$, $AOA_{OLD}$, $AOS_{OLD}$ and $Mach_{OLD}$, do not exist, the latter are considered having their ground value, with the aircraft stationary, prior to take-off. Otherwise, the values of $PS_{\infty OLD}$, $AOA_{OLD}$, $AOS_{OLD}$ and $Mach_{OLD}$ used are the last values calculated (and stored) during the iterations.

The convergence of the iterative calculation is evaluated by comparing the variation of the calculated flight parameters between two successive iterations and a predetermined tolerance Th: when the variation of these parameters is below the established tolerance Th, the iterative calculation has satisfied the convergence criterion. Instead, if the criterion is not satisfied, a new iteration is carried out using the updated state variables vector as the initial condition of the new iteration.

The use of iterative algorithms makes the introduction of convergence control criteria important, these having the purpose of ensuring that it is always possible to obtain a solution for each instance of calculation.

Therefore, in step 30 in Figure 2, an estimate is made of the plurality of static pressure measurements at the locations $i_1$-$i_N$ of the sensors $S_1$-$S_N$.

Once convergence of the iterative resolution process is achieved, the flight parameters calculated in step 20 are then used to provide an estimate of the static pressure values at the locations $i_1$-$i_N$ by means of the aerodynamic model defined by equation (1). In practice, by inserting the values of the flight parameters $Ps_\infty$, AOA, AOS and Mach calculated in step 20 into equation (1), an estimated pressure value $Y_1$-$Y_N$ for each sensor $S_1$-$S_N$ is obtained.

The comparison between these estimates $Y_1$-$Y_N$ and the value $X_1$-$X_N$ effectively measured at the locations $i_1$-$i_N$ provides an indication of the quality of the solution found: the difference (or residual) between the estimated pressure values and the measured ones $(X_1$-$Y_1, ..., X_N$-$Y_N)$ represents the calculation error or level of approximation of the flight parameters with respect to their "real" values.

The comparison in step 30 enables, step 40, identifying possible failures of one or more sensors $S_1$-$S_N$.

In fact, on the basis of the definition of "residual" (i.e., $X_1$-$Y_1, ..., X_N$-$Y_N$) provided in the previous paragraph, the functionality of identifying the failure of a single sensor $S_1$-$S_N$ is obtained through the statistical analysis of these residuals, in particular by calculating the standard deviation of the residuals. To render the process of identifying individual failures effective and resilient, the residuals are calculated, as well as starting from the consolidated solution by using all "N" sensors $S_1$-$S_N$ of the system, also from those obtained by the use of sensor subgroups. Each subgroup is constituted by all of the pressure sensors $S_1$-$S_N$ less one. With this logical approach, it is possible to identify a number "N" of mutually different subgroups, each composed of N-1 sensors. By calculating a value of standard deviation of the residuals for each subgroup, it is possible to compare the values of standard deviation associated with each subgroup with one other. Failure identification is achieved by comparing these values of standard deviation with each another.

The standard value associated with the subgroup that excludes the faulty sensor (i.e. that provides local static pressure values not consistent with those of the other locations) is significantly smaller than those of the other subgroups. By defining one or more thresholds, the pressure sensor missing from the subgroup having a standard value significantly smaller than those of the other subgroups is the pressure sensor that has failed.

This monitoring of residuals enables identifying possible failure of a sensor, represented by possible "freezing" of the reported data or drifting in its reading.

Once the failure of a single sensor is identified, step 50, the flight parameters that are consolidated and transmitted, for example to the flight control system, are those related to the subgroup that excludes the failed sensor, thus rendering the failure isolation functionality effective.

From the foregoing, it is evident that the method according to the present invention represents a significant development with respect to that described in the literature and known in the state of the art.

Application of the described methodology allows the calculation of flight parameters through the use of sensors buried in the surface of the aircraft, giving the system characteristics of low contribution to the radar signature during flight, less exposure to the risk of bird impact during flight, and easier handling for operators during ground operations (less risks of damaging the sensors).

With regard to low radar signature aircraft, the main advantage of this methodology of calculation of the flight parameters is represented by the use of mathematical models that enable easier validation of the entire process, with positive repercussions in terms of traceability and verification in a possible certification procedure.

Finally, it is clear that modifications and variants can be made to the invention set forth herein without departing from the scope of the present invention, as defined in the appended claims.

**Claims**

1. A method for calculation and consolidation of a first plurality of flight parameters of an aircraft (1) including a second plurality, equal to or greater than said first plurality, of pressure sensors $(S_1-S_N)$ arranged at respective locations $(i_1-i_N)$ on the aircraft, each pressure sensor being configured to provide a transduced pressure value $(X_1-X_N)$ on the basis of a respective detected static pressure value, the method comprising the step of acquiring (10) said transduced pressure values $(X_1-X_N)$ from the pressure sensors, and being **characterized by** further comprising the steps of:

   a- defining (20) a system of equations by associating with each transduced pressure value $(X_1-X_N)$ a respective non-linear mathematical model that is a function of said flight parameters and which defines a mathematical relationship between each transduced pressure value and the aerodynamic behaviour of the aircraft (1) at the location $(i_1-i_N)$ of the pressure sensor $(S_1-S_N)$ that has generated this transduced pressure value;
   b- iteratively solving (20) said system of equations, obtaining a current value of each of said flight parameters at each respective location $(i_1-i_N)$;
   c- calculating (30), for each respective location $(i_1-i_N)$, a respective estimated pressure value $(Y_1-Y_N)$ by applying the current values of said flight parameters calculated for the respective location $(i_1-i_N)$ to each mathematical model;
   d- comparing (30, 40) each transduced pressure value $(X_1-X_N)$ with the respective estimated pressure value $(Y_1-Y_N)$, obtaining a result value; and
   e- detecting (40) an operation state of said pressure sensors $(S_1-S_N)$ on the basis of said result value by performing statistical analysis on said result values, wherein said statistical analysis comprises:

   defining a plurality of subgroups of said pressure sensors $(S_1-S_N)$ different from each other, each subgroup comprising a number of sensors equal to the total number of said pressure sensors $(S_1-S_N)$ minus one;
   repeating steps a- to d- for each subgroup of said pressure sensors $(S_1-S_N)$ ;
   calculating a value of standard deviation of said result value for each subgroup; and
   comparing said values of standard deviation of each subgroup with each other.

2. The method according to claim 1, wherein the step of iteratively solving said system of equations comprises solving the system of equations using the Newton-Raphson Method.

3. The method according to claim 1 or 2, wherein said flight parameters comprise an angle of attack, an angle of sideslip, a flight Mach number and a flight static pressure, said non-linear mathematical model being defined by:

$$Ps_\infty + Cp(AOA, AOS, Mach) * \frac{1}{2}\gamma \cdot Ps_\infty Mach^2$$

where AOA represents the angle of attack; AOS represents the angle of sideslip; Mach represents the flight Mach number; $Ps_\infty$ represents the flight static pressure; $\gamma$ is a constant comprised between 1.3 and 1.5; and Cp is a function of said flight parameters that represents a pressure coefficient related to a location $(i_1-i_N)$ on said aircraft (1).

4. The method according to claim 3, wherein obtaining a value of the pressure coefficient Cp comprises:

h. setting a Mach value;

i. setting an angle of sideslip AOS value equal to approximately zero;

j. varying the angle of attack AOA value in predetermined steps, and, for each pair of AOS-AOA values, obtaining a value of the pressure coefficient Cp;

k. repeating step c, setting a non-zero angle of sideslip AOS value;

l. acquiring a value of Cp for each pair of AOS-AOA values, on the basis of an iteration of step d;

m. repeating steps b-e, setting a Mach value different from the value set at step a;

n. constructing, for each Mach value considered at steps a and f, an array ($M_1$-$M_P$) containing a plurality of values of the pressure coefficient Cp for each pair of AOS-AOA values considered.

5. The method according to any of the preceding claims, wherein iteratively solving (20) the system of equations, comprises:

- starting from an initial condition that is the consolidated solution at the previous time of calculation;
- linearizing the system of equations around the consolidated solution at the previous time of calculation;
- solving said system of linear equations so as to obtain the current value of each of said flight parameters related to a location ($i_1$-$i_N$) .

6. The method according to any of the preceding claims, wherein iteratively solving (20) said system of equations further comprises defining a plurality of tolerance thresholds (Th), said current value of the flight parameters being obtained when the variation of said parameters during said iterations is lower than said tolerance threshold.

7. The method according to any of the preceding claims, wherein the step of calculating (30) the plurality of estimated pressure values ($Y_1$-$Y_N$) comprises, for each respective location ($i_1$-$i_N$), entering the current value of the flight parameters calculated in the mathematical model describing the aerodynamic behaviour of the aircraft (1); and solving said mathematical model.

8. The method according to any of the preceding claims, wherein the step of comparing (40) comprises performing a mathematical subtraction operation between each of the estimated pressure values ($Y_1$-$Y_N$) and a respective transduced pressure value ($X_1$-$X_N$), obtaining the respective result value that represents the calculation error of the estimated pressure values ($Y_1$-$Y_N$) with respect to the transduced pressure values ($X_1$-$X_N$).

9. The method according to any one of the preceding claims, wherein said statistical analysis comprises:

- calculating, for each pressure sensor of each subgroup, the respective result value;
- calculating, for each subgroup, a value of standard deviation of the obtained result values;
- detecting, among the values of standard deviation calculated for each subgroup, the one having the lowest value and such that it differs from the other values of standard deviation by an amount greater than a predetermined threshold;
- associating a state of failure with the pressure sensor missing in said subgroup to which the lowest value of standard deviation is associated and such that it differs from the other values of standard deviation by an amount greater than a predetermined threshold.

10. The method according to claim 9, further comprising the step of inhibiting the acquisition (10) of the transduced pressure value ($X_1$-$X_N$) from the pressure sensor to which the state of failure is associated.

11. A calculation and consolidation system of a first plurality of flight parameters of an aircraft (1) that includes a second plurality, equal to or greater than said first plurality, of pressure sensors ($S_1$-$S_N$) arranged in respective locations ($i_1$-$i_N$) on the aircraft, each pressure sensor being configured to provide a transduced pressure value ($X_1$-$X_N$) on the basis of a respective detected static pressure value, the system comprising processing means (5) configured to acquire (10) said transduced pressure values ($X_1$-$X_N$) from the pressure sensors, **characterized in that** the processing means (5) is further configured to:

a- define (20) a system of equations by associating with each transduced pressure value ($X_1$-$X_N$) a respective non-linear mathematical model that is a function of said flight parameters and which defines a mathematical relationship between each transduced pressure value and the aerodynamic behaviour of the aircraft (1) at the location ($i_1$-$i_N$) of the pressure sensor ($S_1$-$S_N$) that has generated this transduced pressure value;

b- iteratively solve (20) said system of equations, obtaining a current value of each of said flight parameters at

each respective location ($i_1$-$i_N$);

c- calculate (30), for each respective location ($i_1$-$i_N$), a respective estimated pressure value ($Y_1$-$Y_N$) by applying the current values of said flight parameters calculated for the respective location ($i_1$-$i_N$) to each mathematical model;

d- compare (30, 40) each transduced pressure value ($X_1$-$X_N$) with the respective estimated pressure value ($Y_1$-$Y_N$), obtaining a result value;

e- detect (40) an operation state of said pressure sensors ($S_1$-$S_N$) on the basis of said result value by performing statistical analysis on said result values,

wherein the processing means (5) are configured to perform said statistical analysis by:

defining a plurality of subgroups of said pressure sensors ($S_1$-$S_N$) different from each other, each subgroup comprising a number of sensors equal to the total number of said pressure sensors ($S_1$-$S_N$) minus one;

repeating steps a- to d- for each subgroup of said pressure sensors ($S_1$-$S_N$) ;

calculating a value of standard deviation of said result value for each subgroup; and

comparing said values of standard deviation of each subgroup with each other.

**12.** A computer program product loadable in a processing means (5) and designed so that, when run on said processing means (5), the processing means are configured to implement the method according to any of claims 1-10.

## Patentansprüche

**1.** Verfahren zur Berechnung und Konsolidierung einer ersten Anzahl von Flugparametern eines Fluggeräts (1), das eine zweite Anzahl von Drucksensoren ($S_1$ - $S_N$), die an jeweiligen Stellen ($i_1$ - $i_N$) am Fluggerät angeordnet sind, aufweist, wobei die zweite Anzahl größer oder gleich der ersten Anzahl ist, wobei jeder Drucksensor dafür konfiguriert ist, auf der Grundlage eines jeweiligen erfassten statischen Druckwerts einen gewandelten Druckwert ($X_1$ - $X_N$) bereitzustellen, wobei das Verfahren den Schritt des Erhaltens (10) der gewandelten Druckwerte ($X_1$ - $X_N$) von den Drucksensoren aufweist und **dadurch gekennzeichnet ist, dass** es ferner folgende Schritte aufweist:

a- Definieren (20) eines Gleichungssystems durch Assoziieren eines jeweiligen nichtlinearen mathematischen Modells mit jedem gewandelten Druckwert ($X_1$ - $X_N$), das eine Funktion der Flugparameter ist und eine mathematische Beziehung zwischen jedem gewandelten Druckwert und dem aerodynamischen Verhalten des Fluggeräts (1) an der Stelle ($i_1$ - $i_N$) des Drucksensors ($S_1$ - $S_N$), der diesen gewandelten Druckwert erzeugt hat, definiert;

b- iteratives Lösen (20) des Gleichungssystems, wodurch ein aktueller Wert jedes der Flugparameter an jeder jeweiligen Stelle ($i_1$ - $i_N$) erhalten wird;

c- Berechnen (30) eines jeweiligen geschätzten Druckwerts ($Y_1$ - $Y_N$) für jede jeweilige Stelle ($i_1$ - $i_N$) durch Anwenden der für die jeweilige Stelle ($i_1$ - $i_N$) berechneten aktuellen Werte der Flugparameter auf jedes mathematische Modell;

d- Vergleichen (30, 40) jedes gewandelten Druckwerts ($X_1$ - $X_N$) mit dem jeweiligen geschätzten Druckwert ($Y_1$ - $Y_N$), um einen Ergebniswert zu erhalten; und

e- Erkennen (40) eines Betriebszustands der Drucksensoren ($S_1$ - $S_N$) auf der Grundlage des Ergebniswerts durch Ausführen einer statistischen Analyse an den Ergebniswerten, wobei die statistische Analyse Folgendes aufweist:

Definieren einer Anzahl von Untergruppen der Drucksensoren ($S_1$ - $S_N$), die voneinander verschieden sind, wobei jede Untergruppe eine Anzahl von Sensoren aufweist, die gleich der Gesamtzahl der Drucksensoren ($S_1$ - $S_N$) minus eins ist;

Wiederholen der Schritte a- bis d- für jede Untergruppe der Drucksensoren ($S_1$ - $S_N$);

Berechnen des Werts der Standardabweichung des Ergebniswerts für jede Untergruppe; und

Vergleichen der Werte der Standardabweichung jeder Untergruppe miteinander.

**2.** Verfahren nach Anspruch 1, wobei der Schritt des iterativen Lösens des Gleichungssystems das Lösen des Gleichungssystem unter Verwendung des Newton-Raphson-Verfahrens aufweist.

**3.** Verfahren nach Anspruch 1 oder 2, wobei die Flugparameter den Anströmwinkel, den Schiebewinkel, die Flug-Mach-Zahl und den statischen Flugdruck aufweisen, wobei das nichtlineare mathematische Modell definiert ist durch:

$$Ps_\infty + Cp(AOA, AOS, Mach) * \frac{1}{2} \gamma \cdot Ps_\infty Mach^2$$

wobei AOA den Anströmwinkel repräsentiert, AOS den Schiebewinkel repräsentiert, Mach die Flug-Mach-Zahl repräsentiert, $Ps_\infty$ den statischen Flugdruck repräsentiert, $\gamma$ eine Konstante zwischen 1,3 und 1,5 ist und Cp eine Funktion der Flugparameter ist, welche einen Druckkoeffizienten in Bezug auf eine Stelle ($i_1$ - $i_N$) am Fluggerät (1) repräsentiert.

4.  Verfahren nach Anspruch 3, wobei das Erhalten eines Werts des Druckkoeffizienten Cp Folgendes aufweist:

    h. Festlegen eines Mach-Werts;
    i. Festlegen eines Schiebewinkel(AOS)-Werts auf ungefähr null;
    j. Variieren des Anströmwinkel(AOA)-Werts in vorgegebenen Schritten und Erhalten eines Werts des Druckkoeffizienten Cp für jedes Paar von AOS/AOA-Werten;
    k. Wiederholen von Schritt c und Festlegen eines von null verschiedenen Schiebewinkel(AOS)-Werts;
    l. Erhalten eines Werts von Cp für jedes Paar von AOS/AOA-Werten auf der Grundlage einer Iteration von Schritt d;
    m. Wiederholen der Schritte b - e, wobei ein vom in Schritt a festgelegten Wert verschiedener Mach-Wert festgelegt wird;
    n. Bilden eines Felds ($M_1$ - $M_P$), das eine Anzahl von Werten des Druckkoeffizienten Cp für jedes Paar berücksichtigter AOS/AOA-Werte enthält, für jeden in den Schritten a und f berücksichtigten Mach-Wert.

5.  Verfahren nach einem der vorhergehenden Ansprüche, wobei das iterative Lösen (20) des Gleichungssystems Folgendes aufweist:

    - Beginnen mit einer Anfangsbedingung, welche die konsolidierte Lösung bei der vorhergehenden Berechnung ist;
    - Linearisieren des Gleichungssystems um die konsolidierte Lösung bei der vorhergehenden Berechnung;
    - Lösen des linearen Gleichungssystems zum Erhalten des aktuellen Werts jedes der sich auf eine Stelle ($i_1$ - $i_N$) beziehenden Flugparameter.

6.  Verfahren nach einem der vorhergehenden Ansprüche, wobei das iterative Lösen (20) des Gleichungssystems ferner das Definieren mehrerer Toleranzschwellen (Th) aufweist, wobei der aktuelle Wert der Flugparameter erhalten wird, wenn die Variation der Parameter während der Iterationen kleiner als die Toleranzschwelle ist.

7.  Verfahren nach einem der vorhergehenden Ansprüche, wobei beim Schritt des Berechnens (30) der mehreren geschätzten Druckwerte ($Y_1$ - $Y_N$) für jede jeweilige Stelle ($i_1$ - $i_N$) der aktuelle Wert der im das aerodynamische Verhalten des Fluggeräts (1) beschreibenden mathematischen Modell berechneten Flugparameter eingegeben wird und das mathematische Modell gelöst wird.

8.  Verfahren nach einem der vorhergehenden Ansprüche, wobei der Schritt des Vergleichens (40) ein Ausführen einer mathematischen Subtraktionsoperation zwischen jedem der geschätzten Druckwerte ($Y_1$ - $Y_N$) und einem jeweiligen gewandelten Druckwert ($X_1$ - $X_N$) aufweist, wobei der jeweilige Ergebniswert erhalten wird, der den Berechnungs-fehler der geschätzten Druckwerte ($Y_1$ - $Y_N$) in Bezug auf die gewandelten Druckwerte ($X_1$ - $X_N$) repräsentiert.

9.  Verfahren nach einem der vorhergehenden Ansprüche, wobei die statistische Analyse Folgendes aufweist:

    - Berechnen des jeweiligen Ergebniswerts für jeden Drucksensor jeder Untergruppe;
    - Berechnen eines Werts der Standardabweichung der erhaltenen Ergebniswerte für jede Untergruppe;
    - Erkennen desjenigen der für jede Untergruppe berechneten Werte der Standardabweichung, der am niedrigsten ist, wobei er sich von den anderen Werten der Standardabweichung um einen Betrag unterscheidet, der größer als eine vorgegebene Schwelle ist;
    - Assoziieren eines Fehlerzustands mit dem in der Untergruppe fehlenden Drucksensor, mit der der niedrigste Wert der Standardabweichung assoziiert ist und so dass er sich von den anderen Werten der Standardabweichung um einen Betrag unterscheidet, der größer als eine vorgegebene Schwelle ist.

10. Verfahren nach Anspruch 9, welches ferner den Schritt des Unterbindens des Erhaltens (10) des gewandelten

Druckwerts ($X_1$ - $X_N$) von dem Drucksensor, mit dem der Fehlerzustand assoziiert ist, aufweist.

11. System zur Berechnung und Konsolidierung einer ersten Anzahl von Flugparametern eines Fluggeräts (1), das eine zweite Anzahl von Drucksensoren ($S_1$ - $S_N$), die an jeweiligen Stellen ($i_1$ - $i_N$) am Fluggerät angeordnet sind, aufweist, wobei die zweite Anzahl größer oder gleich der ersten Anzahl ist, wobei jeder Drucksensor dafür konfiguriert ist, auf der Grundlage eines jeweiligen erfassten statischen Druckwerts einen gewandelten Druckwert ($X_1$ - $X_N$) bereitzustellen, wobei das System eine Verarbeitungseinrichtung (5) aufweist, die dafür konfiguriert ist, die gewandelten Druckwerte ($X_1$ - $X_N$) von den Drucksensoren zu erhalten (10),
**dadurch gekennzeichnet, dass** die Verarbeitungseinrichtung (5) ferner dafür konfiguriert ist, Folgendes auszuführen:

a- Definieren (20) eines Gleichungssystems durch Assoziieren eines jeweiligen nichtlinearen mathematischen Modells mit jedem gewandelten Druckwert ($X_1$ - $X_N$), das eine Funktion der Flugparameter ist und eine mathematische Beziehung zwischen jedem gewandelten Druckwert und dem aerodynamischen Verhalten des Fluggeräts (1) an der Stelle ($i_1$ - $i_N$) des Drucksensors ($S_1$ - $S_N$), der diesen gewandelten Druckwert erzeugt hat, definiert;
b- iteratives Lösen (20) des Gleichungssystems, wodurch ein aktueller Wert jedes der Flugparameter an jeder jeweiligen Stelle ($i_1$ - $i_N$) erhalten wird;
c- Berechnen (30) eines jeweiligen geschätzten Druckwerts ($Y_1$ - $Y_N$) für jede jeweilige Stelle ($i_1$ - $i_N$) durch Anwenden der für die jeweilige Stelle ($i_1$ - $i_N$) berechneten aktuellen Werte der Flugparameter auf jedes mathematische Modell;
d- Vergleichen (30, 40) jedes gewandelten Druckwerts ($X_1$ - $X_N$) mit dem jeweiligen geschätzten Druckwert ($Y_1$ - $Y_N$), um einen Ergebniswert zu erhalten; und
e- Erkennen (40) eines Betriebszustands der Drucksensoren ($S_1$ - $S_N$) auf der Grundlage des Ergebniswerts durch Ausführen einer statistischen Analyse an den Ergebniswerten,

wobei die Verarbeitungseinrichtung (5) dafür konfiguriert ist, die statistische Analyse durch Folgendes auszuführen:

Definieren einer Anzahl von Untergruppen der Drucksensoren ($S_1$ - $S_N$), die voneinander verschieden sind, wobei jede Untergruppe eine Anzahl von Sensoren aufweist, die gleich der Gesamtzahl der Drucksensoren ($S_1$ - $S_N$) minus eins ist;
Wiederholen der Schritte a- bis d- für jede Untergruppe der Drucksensoren ($S_1$ - $S_N$);
Berechnen des Werts der Standardabweichung des Ergebniswerts für jede Untergruppe; und
Vergleichen der Werte der Standardabweichung jeder Untergruppe miteinander.

12. Computerprogrammprodukt, das in eine Verarbeitungseinrichtung (5) ladbar ist und dafür ausgelegt ist, dass, wenn es auf der Verarbeitungseinrichtung (5) ausgeführt wird, die Verarbeitungseinrichtung dafür konfiguriert ist, das Verfahren nach einem der Ansprüche 1 bis 10 zu implementieren.

**Revendications**

1. Procédé de calcul et de consolidation d'une première pluralité de paramètres de vol d'un aéronef (1) incluant une seconde pluralité, supérieure ou égale à ladite première pluralité, de capteurs de pression ($S_1$-SN) agencés à des emplacements ($i_1$-$i_N$) respectifs sur l'aéronef, chaque capteur de pression étant configuré pour fournir une valeur de pression transduite ($X_1$-$X_N$) sur la base d'une valeur de pression statique détectée respective, le procédé comprenant l'étape d'acquisition (10) desdites valeurs de pression transduites ($X_1$-$X_N$) par les capteurs de pression, et étant **caractérisé par le fait qu'**il comprend en outre les étapes de :

a- définition (20) d'un système d'équations par association à chaque valeur de pression transduite ($X_1$-$X_N$) d'un modèle mathématique non linéaire respectif qui est une fonction desdits paramètres de vol et qui définit une relation mathématique entre chaque valeur de pression transduite et le comportement aérodynamique de l'aéronef (1) à l'emplacement ($i_1$-$i_N$) du capteur de pression ($S_1$-$S_N$) qui a généré cette valeur de pression transduite ;
b- résolution itérative (20) dudit système d'équations, en obtenant une valeur actuelle de chacun desdits paramètres de vol à chaque emplacement ($i_1$-$i_N$) respectif ;
c- calcul (30), pour chaque emplacement ($i_1$-$i_N$) respectif, d'une valeur de pression estimée ($Y_1$-$Y_N$) respective en appliquant les valeurs actuelles desdits paramètres de vol calculées pour l'emplacement ($i_1$-$i_N$) respectif à chaque modèle mathématique ;

d- comparaison (30, 40) de chaque valeur de pression transduite ($X_1$-$X_N$) à la valeur de pression estimée ($Y_1$-$Y_N$) respective, en obtenant une valeur de résultat ; et

e- détection (40) d'un état de fonctionnement desdits capteurs de pression ($S_1$-$S_N$) sur la base de ladite valeur de résultat en réalisant une analyse statistique sur lesdites valeurs de résultat, dans laquelle ladite analyse statistique comprend :

   la définition d'une pluralité de sous-groupes desdits capteurs de pression ($S_1$-$S_N$) différents les uns des autres, chaque sous-groupe comprenant un nombre de capteurs égal au nombre total desdits capteurs de pression ($S_1$-$S_N$) moins un ;
   la répétition des étapes a- à d- pour chaque sous-groupe desdits capteurs de pression ($S_1$-$S_N$) ;
   le calcul d'une valeur d'écart-type de ladite valeur de résultat pour chaque sous-groupe ; et
   la comparaison desdites valeurs d'écart-type de chaque sous-groupe les unes aux autres.

2. Procédé selon la revendication 1, dans lequel l'étape de résolution itérative dudit système d'équations comprend la résolution du système d'équations en utilisant le procédé de Newton-Raphson.

3. Procédé selon la revendication 1 ou 2, dans lequel lesdits paramètres de vol comprennent un angle d'attaque, un angle de dérapage, un nombre de Mach de vol et une pression statique de vol, ledit modèle mathématique non linéaire étant défini par :

$$Ps_\infty + Cp(AOA, AOS, Mach) * \frac{1}{2}\gamma \cdot Ps_\infty Mach^2$$

où AOA représente l'angle d'attaque ; AOS représente l'angle de dérapage ; Mach représente le nombre de Mach de vol ; $Ps_\infty$ représente la pression statique de vol ; $\gamma$ est une constante comprise entre 1,3 et 1,5 ; et Cp est une fonction desdits paramètres de vol qui représente un coefficient de pression relatif à un emplacement ($i_1$-$i_N$) sur ledit aéronef (1).

4. Procédé selon la revendication 3, dans lequel l'obtention d'une valeur du coefficient de pression Cp comprend :

   h. le réglage d'une valeur de Mach ;
   i. le réglage d'une valeur d'angle de dérapage AOS environ égale à zéro ;
   j. la variation de la valeur d'angle d'attaque AOA dans des étapes prédéterminées, et, pour chaque paire de valeurs AOS-AOA, l'obtention d'une valeur du coefficient de pression Cp ;
   k. la répétition de l'étape c, le réglage d'une valeur d'angle de dérapage AOS non nulle ;
   l. l'acquisition d'une valeur de Cp pour chaque paire de valeurs AOS-AOA, sur la base d'une itération de l'étape d ;
   m. la répétition des étapes b à e, le réglage d'une valeur de Mach différente de la valeur réglée à l'étape a ;
   n. la construction, pour chaque valeur de Mach considérée aux étapes a et f, d'un tableau ($M_1$-$M_P$) contenant une pluralité de valeurs du coefficient de pression Cp pour chaque paire de valeurs AOS-AOA considérée.

5. Procédé selon l'une des revendications précédentes, dans lequel la résolution itérative (20) du système d'équations comprend :

   - le démarrage à partir d'une condition initiale qui est la solution consolidée lors du calcul précédent ;
   - la linéarisation du système d'équations autour de la solution consolidée lors du calcul précédent ;
   - la résolution dudit système d'équations linéaires de manière à obtenir la valeur actuelle de chacun desdits paramètres de vol relatifs à un emplacement ($i_1$-$i_N$).

6. Procédé selon l'une des revendications précédentes, dans lequel la résolution itérative (20) dudit système d'équations comprend en outre la définition d'une pluralité de seuils de tolérance (Th), ladite valeur actuelle des paramètres de vol étant obtenue lorsque la variation desdits paramètres au cours desdites itérations est inférieure audit seuil de tolérance.

7. Procédé selon l'une des revendications précédentes, dans lequel l'étape de calcul (30) de la pluralité de valeurs de pression estimées ($Y_1$-$Y_N$) comprend, pour chaque emplacement ($i_1$-$i_N$) respectif, la saisie de la valeur actuelle des paramètres de vol calculés dans le modèle mathématique décrivant le comportement aérodynamique de l'aéronef (1) ; et la résolution dudit modèle mathématique.

**8.** Procédé selon l'une des revendications précédentes, dans lequel l'étape de comparaison (40) comprend la réalisation d'une opération de soustraction mathématique entre chacune des valeurs de pression estimées ($Y_1$-$Y_N$) et une valeur de pression transduite ($X_1$-$X_N$) respective, pour obtenir la valeur de résultat respective qui représente l'erreur de calcul des valeurs de pression estimées ($Y_1$-$Y_N$) par rapport aux valeurs de pression transduites ($X_1$-$X_N$).

**9.** Procédé selon l'une des revendications précédentes, dans lequel ladite analyse statistique comprend :

- le calcul, pour chaque capteur de pression de chaque sous-groupe, de la valeur de résultat respective ;
- le calcul, pour chaque sous-groupe, d'une valeur d'écart-type des valeurs de résultat obtenues ;
- la détection, parmi les valeurs d'écart-type calculées pour chaque sous-groupe, de celle ayant la valeur la plus basse et telle qu'elle diffère des autres valeurs d'écart-type d'une quantité supérieure à un seuil prédéterminé ;
- l'association d'un état d'échec au capteur de pression manquant dans ledit sous-groupe auquel la valeur la plus basse d'écart-type est associée et telle qu'elle diffère des autres valeurs d'écart-type d'une quantité supérieure à un seuil prédéterminé.

**10.** Procédé selon la revendication 9, comprenant en outre l'étape d'inhibition de l'acquisition (10) de la valeur de pression transduite ($X_1$-$X_N$) par le capteur de pression auquel l'état d'échec est associé.

**11.** Système de calcul et de consolidation d'une première pluralité de paramètres de vol d'un aéronef (1) qui inclut une seconde pluralité, supérieure ou égale à ladite première pluralité, de capteurs de pression ($S_1$-SN) agencés à des emplacements ($i_1$-$i_N$) respectifs sur l'aéronef, chaque capteur de pression étant configuré pour fournir une valeur de pression transduite ($X_1$-$X_N$) sur la base d'une valeur de pression statique détectée respective, le système comprenant un moyen de traitement (5) configuré pour acquérir (10) lesdites valeurs de pression transduites ($X_1$-$X_N$) par les capteurs de pression,
**caractérisé en ce que** le moyen de traitement (5) est en outre configuré pour :

a- définir (20) un système d'équations par association à chaque valeur de pression transduite ($X_1$-$X_N$) d'un modèle mathématique non linéaire respectif qui est une fonction desdits paramètres de vol et qui définit une relation mathématique entre chaque valeur de pression transduite et le comportement aérodynamique de l'aéronef (1) à l'emplacement ($i_1$-$i_N$) du capteur de pression ($S_1$-$S_N$) qui a généré cette valeur de pression transduite ;
b- résoudre de manière itérative (20) ledit système d'équations, en obtenant une valeur actuelle de chacun desdits paramètres de vol à chaque emplacement ($i_1$-$i_N$) respectif ;
c- calculer (30), pour chaque emplacement ($i_1$-$i_N$) respectif, une valeur de pression estimée ($Y_1$-$Y_N$) respective en appliquant les valeurs actuelles desdits paramètres de vol calculées pour l'emplacement ($i_1$-$i_N$) respectif à chaque modèle mathématique ;
d- comparer (30, 40) chaque valeur de pression transduite ($X_1$-$X_N$) à la valeur de pression estimée ($Y_1$-$Y_N$) respective, en obtenant une valeur de résultat ;
e- détecter (40) un état de fonctionnement desdits capteurs de pression ($S_1$-$S_N$) sur la base de ladite valeur de résultat en réalisant une analyse statistique sur lesdites valeurs de résultat,

dans lequel le moyen de traitement (5) est configuré pour réaliser ladite analyse statistique par :

définition d'une pluralité de sous-groupes desdits capteurs de pression ($S_1$-$S_N$) différents les uns des autres, chaque sous-groupe comprenant un nombre de capteurs égal au nombre total desdits capteurs de pression ($S_1$-$S_N$) moins un ;
répétition des étapes a- à d- pour chaque sous-groupe desdits capteurs de pression ($S_1$-$S_N$) ;
calcul d'une valeur d'écart-type de ladite valeur de résultat pour chaque sous-groupe ; et
comparaison desdites valeurs d'écart-type de chaque sous-groupe les unes aux autres.

**12.** Produit de programme informatique pouvant être chargé dans un moyen de traitement (5) et conçu de manière à ce que, lorsqu'il est exécuté sur ledit moyen de traitement (5), le moyen de traitement soit configuré pour mettre en oeuvre le procédé selon l'une des revendications 1 à 10.

FIG. 1b

FIG. 1a

START

PLURALITY OF STATIC PRESSURE
MEASUREMENTS AT SENSOR LOCATIONS — 10

FLIGHT PARAMETERS CALCULATION — 20

ESTIMATION OF PLURALITIES OF
STATIC PRESSURE MEASUREMENTS AT
SENSOR LOCATIONS — 30

COMPARISON OF PREVIOUS ESTIMATES
WITH REAL MEASUREMENTS:
IDENTIFICATION OF POSSIBILE FAILURES — 40

FAILURE ISOLATION AND
CONSOLIDATION OF FLIGHT
PARAMETERS — 50

END

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2432914 A
- US 2011238373 A
- US 5423209 A
- EP 2434296 A
- US 2004011124 A